Europäisches Patentamt

European Patent Office

Office européen des brevets

(11) Publication number: **0 257 884**
**A2**

# EUROPEAN PATENT APPLICATION

(21) Application number: 87306996.7

(22) Date of filing: 06.08.87

(51) Int. Cl.4: **G01S 7/02**

The title of the invention has been amended (Guidelines for Examination in the EPO, A-III, 7.3).

(30) Priority: 20.08.86 GB 8620289

(43) Date of publication of application:
**02.03.88 Bulletin 88/09**

(84) Designated Contracting States:
**DE FR GB IT NL SE**

(71) Applicant: **PLESSEY OVERSEAS LIMITED**
**Vicarage Lane**
**Ilford Essex IGI 4AQ(GB)**

(72) Inventor: **Graham, Robert Keith**
**Belmont Farm Cottage North Fairlee**
**Newport Isle of Wight(GB)**

(74) Representative: **Sorenti, Gino**
**Intellectual Property Department The**
**Plessey Company plc 2-60 Vicarage Lane**
**Ilford Essex IG1 4AQ(GB)**

(54) **Radar transmitter-receiver isolation network.**

(57) A transmit/receive antenna array network for use in a radar system comprises hybrid means for applying equal amplitude anti-phase components of a microwave transmit signal to respective parts of an antenna array having power divider and phase shifting arrangements associated therewith. The phase shifting means are appropriately switched for a signal transmission operation to provide not only the requisite beam angle and power tapering but to compensate for the phase displacement between the transmit signal components received from the hybrid means, and the phase shifting means is appropriately switched following the signal transmission operation but before an echo signal receive operation so that received or echo signals are brought into equi-phase before being fed to the hybrid means which provides a "sum" output for processing and display whilst providing complete isolation between the received signals and the transmitter output.

FIG 1

## IMPROVEMENTS RELATING TO RADAR SYSTEMS

This invention relates to radar systems and relates more specifically to transmit/receive antenna array networks for such systems effective for providing isolation between the transmitted and received microwave signals.

In one known form of transmit/receive antenna array network for providing such signal isolation the power signal from the transmitter is split equally in amplitude and phase before being fed into corresponding inputs of respective waveguide circulators. These waveguide circulators accordingly produce outputs which are equal in amplitude and phase and are fed, respectively, into power divider and phase shifting arrangements associated with the two halves of a transmit/receive antenna array. The power divider and phase shifting arrangements control the power and phases of signals applied to the elements of the antenna array in order to provide the requisite beam angle of transmitted signals and the so-called power tapering characteristic or pattern of such transmitted signals.

To ensure that all of the components of a received or echo signal impinging on the elements of the antenna array are brought into equi-phase the phase shifters appertaining to the array elements will be suitably switched between the transmit and receive operation of the network. The in-phase outputs from the power divider arrangements of the respective half arrays are then fed back into appropriate inputs of the aforesaid waveguide circulators which accordingly produce zero outputs along the transmit signal channels but provide outputs along paths extending through a hybrid waveguide device which produces "sum' and "difference" outputs for processing and subsequent display of target echo signals in the receiver.

The waveguide circulators referred to are heavy and bulky structures which are very expensive to manufacture. The present invention seeks to avoid the use of waveguide circulators whilst achieving isolation between the transmitted and received signals and providing improved electrical characteristics particularly with regard to power handling and dissipative loss.

According to the present invention, as broadly conceived, there is provided a transmit/receive antenna array network for use in a radar system, comprising hybrid means for applying equal amplitude anti-phase components of a microwave transmit signal to respective parts of an antenna array having power divider and phase shifting arrangements associated therewith, the phase shifting means being appropriately switched for a signal transmission operation to provide not only the requisite beam angle and power tapering, if required, but to compensate for the phase displacement between the transmit signal components received from the hybrid means and the phase shifting means being appropriately switched following the signal transmission operation but before an echo signal receive operation so that received or echo signals are brought into equi-phase before being fed to the hybrid means which provides a "sum" output or outputs for processing and display whilst providing complete isolation between the received signals and the transmitter output.

In applying the present invention to a non-monopulse system the hybrid means may comprise a single hybrid waveguide or stripline, according to the operating power level of the network, with the complete antenna array being divided into two equal parts having associated power divider and phase shifting arrangements which receive the equal amplitude anti-phase outputs from the single hybrid waveguide or stripline, as the case may be, and which feed equi-phase received signals to the hybrid which accordingly provides a "sum" output for processing and display purposes in the receiver but no output from its "difference" output thereby achieving isolation between the transmit and received signals.

In applying the present invention to a monopulse radar system, however, the hybrid means comprises two hybrid waveguides or stripline devices which receive the respective parts (i.e. transmit signals) of an equally-divided microwave signal generated by a power transmitter. Each of the hybrid devices provides two outputs of equal amplitude but opposite phase which are fed to respective sections or parts of one half of the antenna array through power divider and phase shifting arrangements, the phase shifting arrangement of one of these parts of each half array providing compensation during the transmit operation to eliminate the 180° phase displacement between the outputs of the appertaining hybrid device. The number of antenna elements in the respective sections of each half array and thus the power distribution to such elements will be determined in accordance with the requisite power-tapering characteristics for the transmitted microwave beam signal. Received echo signals are brought into equi-phase by the phase shifting arrangements associated with the four sections or parts of the aerial array and the corresponding received signal outputs from each half array are fed into the appertaining hybrid device. The "sum" outputs from the hybrid devices are then fed into a further hybrid which provides "sum" and "difference" outputs which are fed to processing and display means of a receiver, preferably with intervention of power limiting means to protect the processing and display means against potentially damaging incoming power signals from the transmitter under fault conditions.

By way of example the present invention will now be described with reference to the accompanying drawings in which:

Figure 1 shows a transmit/receive aerial antenna array network for use in monopulse radar systems; and,

Figure 2 shows a transmit/receive aerial antenna array network for use in a non-monopulse radar system.

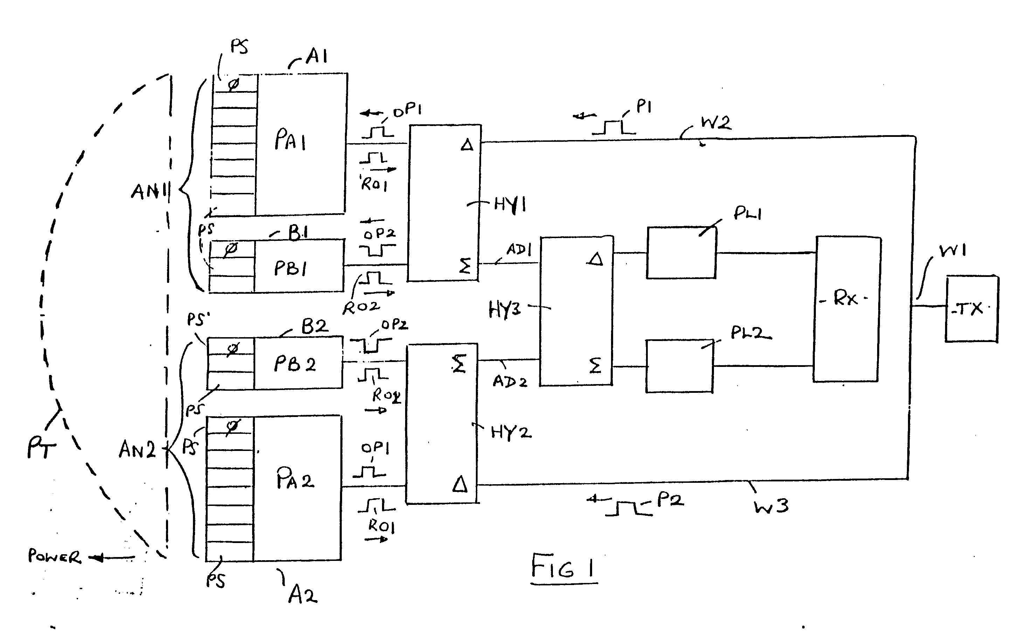

Referring to Figure 1 of the drawings, the receive/transmit aerial antenna array comprises two half arrays AN1 and AN2 each of which is similarly divided into two sections A1 and B1 and A2 and B2, the sections A1 and A2 each having "n" antenna elements and the section B1 and B2 each having "N-n" elements. The ratio between the number of array elements "n" and "N-n" in the half array sections will be predetermined according to the requisite power-tapering characteristic of the transmitted beam signals such as shown purely by way of example at PT in Figure 1.

The aerial array elements have phase shifters PS individually associated therewith and these phase shifters may be switched appropriately during signal transmission and signal receive operations to provide the requisite beam angles of transmitted microwave signals and to bring all components of echo signals received by the array elements into equi-phase. The appropriate distribution of power to the antenna elements is performed by power dividers indicated at PA1, PB1 and PA2, PB2.

Microwave signals for transmission by the aerial array are generated by power transmitter TX. These generated signals are split equally in amplitude and phase by the use of a suitable junction waveguide or stripline device W1 and the resultant transmit pulses P1 and P2 are fed along waveguides or stripline devices W2 and W3.

The transmit signals P1 and P2 are applied to the corresponding inputs of two waveguide or stripline hybrid devices HY1 and HY2 each arranged to provide outputs OP1 and OP2 which are of equal amplitude but in anti-phase with one another. These anti-phase pulses OP1 and OP2 from the hybrid HY1 are applied to the power dividers PA1 and PB1, respectively, whereas the anti-phase pulses OP1 and OP2 from hybrid HY2 are applied to the power dividers PA2 and PB2, respectively. These power dividers distribute the power between the antenna array elements in order to generate the requisite power sum pattern or power-tapering characteristic as shown at PT.

The phase shifters PS are switched effectively to eliminate the phase difference of 180° between the input pulses OP1 and OP2 and at the same time to provide the desired beam angle of the transmitted microwave signal.

After transmission of the suitably steered beam signal the phase shifters PS will be switched in order to bring all of the components of any received or echo signal into equi-phase prior to the power dividers PA1, PB1, PA2, PB2 performing summation of these components to produce in-phase signals RO1 and RO2. These receive signals RO1 and RO2 from the respective power dividers of each half array of the antenna are applied to the hybrids HY1 and HY2, as shown. Added signals AD1 and AD2 are derived from the "sum" outputs ($\Sigma$) of the hybrids HY1 and HY2 but there will be zero outputs from the "difference" outputs ($\Delta$) of the hybrids HY1 and HY2. Thus complete isolation is achieved between the transmitted and received signals by the use of the hybrids HY1 and HY2 which are considerably cheaper and less bulky and heavy than waveguide circulators which have hitherto been used for transmit-receive signal isolation purposes.

Since the present invention is a monopulse system the summed outputs from the hybrids HY1 and HY2 are fed into a further hybrid HY3 and the "sum" and "difference" outputs of this hybrid are then fed to a signal processing display means of the receiver RX through respective power limiters PL1 and PL2 which prevent the relatively high transmitted power from reaching the relatively low power receiver.

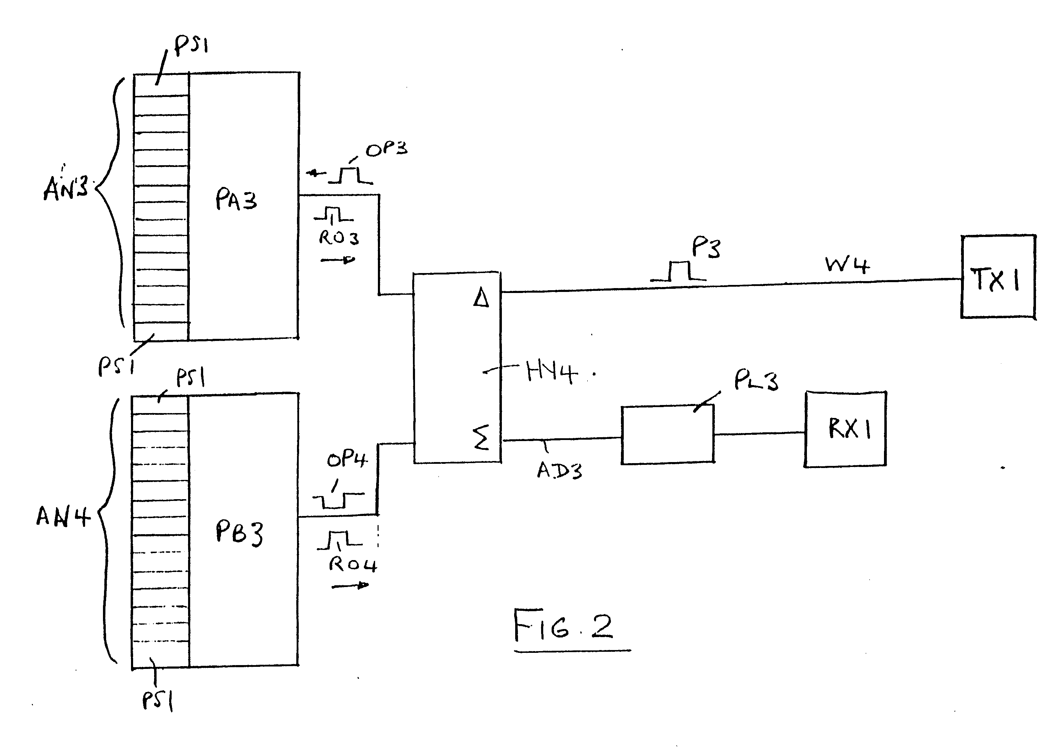

Referring now to Figure 2 of the drawings, this shows a transmit/receive antenna array network for use in a conventional non-monopulse radar system. As will be seen from the Figure the network comprises a single hybrid HY4 which effectively divides the transmit pulse signal P3 into two signals OP3 and OP4 of equal amplitude but opposite in phase. In this embodiment the aerial array is divided into two equal parts AN3 and AN4 having a like number of antenna elements and the power dividers PA3 and PB3 distribute the transmitted power to the various antenna elements in order to provide the requisite power-tapering pattern or characteristic (not shown) with the intervention of the phase shifters PS1 which are switched during transmission to compensate for the 180° phase displacement between the incoming transmit signals OP3 and OP4 and to provide the requisite beam angle of the transmitted signal.

Before received echo signals impinge on the aerial array the phase shifters PS1 will be switched to provide equi-phase signals which are summed by the power dividers PA3 and PA4 to provide signals RO3 and RO4 before being applied to the hybrid HY4 as shown. The hybrid device HY4 then produces a "sum" output AD3 from its sum port (Σ) which passes through a power limiter PL3 to signal processing and display means of a receiver RX1. However, once again the hybrid HY4 produces zero output from its "difference" port (Δ) thereby providing complete isolation between the transmit and receive signals.

It may here be mentioned in the case of the Figure 1 embodiment a further hybrid could be introduced at the junction point W1 where the generated transmitter signal is divided into two. In such an arrangement the phase shifters PS associated with one half of the antenna array would not be switched between the transmit and receive stages whereas the phase shifters associated with the other half of the array would be switched through 180°. This causes signals to be produced at the "difference" ports (Δ) of the hybrids HY1 and HY2 but these "difference" signals which will appear in the waveguides W2 and W3 are in anti-phase and will exit through a port in the additional hybrid in order to prevent these received signals from gaining access to the output channel of the transmitter TX. This arrangement accordingly offers the opportunity to monitor jamming signals during the interval between the transmission and reception of radar signals.

## Claims

1. A transmit/receive antenna array network for use in a radar system, comprising hybrid means for applying equal amplitude anti-phase components of a microwave transmit signal to respective parts of an antenna array having power divider and phase shifting means associated therewith, the phase shifting means being appropriately switched for a signal transmission operation to provide not only the requisite transmit (beam angle), but to compensate for the phase displacement between the transmit signal components received from the hybrid means and the phase shifting means being appropriately switched following the signal transmission operation but before an echo signal receive operation so that received or echo signals are brought into equi-phase before being fed to the hybrid means which provides a "sum" output or outputs for processing and display whilst providing complete isolation between the received signals and the transmitter output.

2. A transmit/receive antenna array network as claimed in Claim 1 for use in a non-monopulse radar system, in which the hybrid means comprises a single hybrid waveguide or stripline according to the operating power level of the network, in which the complete antenna array is divided into two equal parts having associated power divider and phase divider and phase shifting means which receive the equal amplitude anti-phase outputs from the single hybrid waveguide or stripline and which feed equi-phase received signals to the hybrid which accordingly provides a "sum" output for processing and display purposes in receiver but no output from its "difference" output thereby achieving isolation between the transmit and received signals.

3. A transmit/receive antenna array network as claimed in Claim 1 for use in a monopulse radar system, in which the hybrid means comprises two hybrid waveguides or stripline devices which receive the respective parts of an equally-divided microwave transmit signal generated by a power transmitter, in which each of the hybrid devices provides two outputs of equal amplitude but opposite phase which are fed to respective sections or parts of one half of the antenna array through power divider and phase shifting means, and in which the phase shifting means of one of these parts of each half array provides compensation during the transmit operation to eliminate the 180° phase displacement between the outputs of the appertaining hybrid device, the received echo signals being brought into equi-phase by the phase shifting means associated with the four sections of the aerial array and the corresponding received signal outputs from each half array being fed into the appertaining hybrid device, the "sum" outputs from the hybrid devices then being fed into a further hybrid which provides "sum" and "difference" outputs which are fed to processing and display means of a receiver.

4. A transmit/receive antenna array as claimed in Claim 3, in which the phase shifting means is appropriately switched for a signal transmission operation to provide power tapering and in which the number of antenna elements in the respective sections of each half array and thus the power distribution to such elements is determined in accordance with the requisite power-tapering characteristics for the transmitted microwave beam signal.

5. A transmit/receive antenna array as claimed in Claim 1 or Claim 2, in which power limiting means is provided between the hybrid means and the processing and display means of the receiver to protect the latter against potentially damaging incoming power signals from the transmitter under fault conditions.

Fig 1

FIG. 2